# EUROPÄISCHE PATENTSCHRIFT

(11) **EP 2 158 056 B1**
(45) Veröffentlichungstag und Bekanntmachung des Hinweises auf die Patenterteilung: **28.06.2017**
(21) Anmeldenummer: 08749538.8
(22) Anmeldetag: 11.04.2008
(51) Int. Cl.: B23D 61/00

(54) **SÄGEBLATT FÜR WERKZEUGMASCHINEN**
SAW BLADE FOR MACHINE TOOLS
LAME DE SCIE POUR MACHINES OUTILS

(30) Priorität: 11.06.2007 DE 102007027290; 05.12.2007 DE 102007058889
(43) Veröffentlichungstag der Anmeldung: 03.03.2010
(73) Patentinhaber: Robert Bosch GmbH, 70442 Stuttgart (DE)
(72) Erfinder: GROLIMUND, Daniel, CH-4528 Zuchwil (CH); KOCHER, Martin, CH-4500 Solothurn (CH)
(86) Internationale Anmeldenummer: PCT/EP2008/054387
(87) Internationale Veröffentlichungsnummer: WO 2008/151866

(56) Entgegenhaltungen:
- EP-A- 0 637 433
- WO-A-2008/029005
- CH-A- 452 871
- DE-A1- 1 677 200
- DE-A1- 4 203 110
- DE-A1- 10 325 392
- DE-B- 1 177 454
- DE-C- 677 993
- DE-U1- 8 208 339
- DE-U1- 29 605 728
- DE-U1-202004 007 929
- GB-A- 570 917
- GB-A- 191 023 864
- JP-A- 5 228 727
- US-A- 5 152 640
- US-A1- 2006 009 796

## Beschreibung

Die Erfindung bezieht sich auf ein Sägeblatt für Werkzeugmaschinen, insbesondere für Handwerkzeugmaschinen wie Sägen, Trennschleifer oder Handkreissägen, nach dem Oberbegriff des Anspruches 1.

### Stand der Technik

In der DE 203 08 797 U1 wird ein Sägeblatt für eine Säge mit drehoszillierender Antriebsbewegung beschrieben. Das Sägeblatt besteht aus einem scheibenförmigen Stammblatt, dessen Außenrand als kreisförmige Schneide mit Sägezähnen ausgebildet ist. Im Stammblatt ist in einem inneren Befestigungsabschnitt eine Befestigungsöffnung vorgesehen, über die das Sägeblatt mit der Antriebswelle der Säge zu verbinden ist. Über einen gekröpften Abschnitt geht der Befestigungsabschnitt in einen radial versetzten Arbeitsabschnitt über, dessen Außenrand mit den Sägezähnen versehen ist.

Der Arbeitsabschnitt des Sägeblattes mit den Sägezähnen soll aus Bimetall gefertigt sein. Zur Herstellung des Sägeblattes wird ein Bimetall-Rohling durch Ausstanzen in die gewünschte Form gebracht, wobei ggf. auch die Sägezähne ausgestanzt werden können. Danach wird das gestanzte Bauteil einer Wärmebehandlung zur Härtung bzw. Vergütung des Sägeblattes und der Sägezähne unterzogen. Mit der aus Bimetall bestehenden Schneide sollen eine höhere Standfestigkeit erreicht und außerdem unterschiedliche Materialien sägbar sein.

Die Fertigung der Schneide aus einem Bimetall-Werkstoff erfordert aufgrund der Temperaturempfindlichkeit des Bimetalls einen präzise mechanische und thermische Bearbeitung bei der Herstellung des Sägeblattes. Außerdem besteht bei Bimetallwerkstoffen die Gefahr, dass die Wärmeentwicklung während des Sägebetriebs zu einer Änderung der Geometrie der Schneidzähne führt.

Zu berücksichtigen ist auch, dass die Zähne im Schneidbereich geschränkt werden müssen, was den Herstellungsprozess insgesamt verteuert. Ein Sägeblatt gemäß dem Oberbegriff des Anspruchs 1 ist der DE 20 2004 007 929 U1 zu entnehmen.

### Offenbarung der Erfindung

Der Erfindung liegt die Aufgabe zugrunde, mit einfachen Maßnahmen ein Sägeblatt für Werkzeugmaschinen zu schaffen, das eine lange Lebensdauer aufweist und kostengünstig herzustellen ist. Die Herstellung des Sägeblatts soll insbesondere ohne aufwändige Nachbearbeitung durchzuführen sein.

Diese Aufgabe wird erfindungsgemäß mit den Merkmalen des Anspruches 1 gelöst. Die Unteransprüche geben zweckmäßige Weiterbildungen an.

Das erfindungsgemäße Sägeblatt eignet sich für einen Einsatz in Werkzeugmaschinen, insbesondere in Handwerkzeugmaschinen, wie z.B. Sägen, Trennschleifer oder Handkreissägen, wobei das Sägeblatt drehoszillierend angetrieben wird. Das Sägeblatt besteht aus einem Stammblatt, welches zumindest im Bereich der Schneidfläche abschnittsweise bogenförmig ausgebildet ist, sowie einem als separates Bauteil ausgeführten Schneidstreifen, der gebogen ist und auf den bogenförmigen Abschnitt des Stammblattes angepasst ist. Stammblatt und Schneidstreifen bilden separate Bauteile, die jedoch fest miteinander verbunden werden, wobei der Schneidstreifen in Achsrichtung gesehen zumindest eine der Seitenflächen des Stammblattes überragt. Die Materialien von Stammblatt und Schneidstreifen können den jeweiligen Aufgabe entsprechend gewählt werden, wobei für das Stammblatt insbesondere ein weicheres und für den Schneidstreifen ein härteres Material verwendet wird. Infrage kommt beispielsweise ein kohlenstoffhaltiger Werkzeugstahl wie HCS für das Stammblatt und ein Schnellarbeitsstahl wie HSS für den Schneidstreifen. Das relativ weiche Stammblatt verzieht sich bei der Herstellung des Sägeblattes nicht oder nur geringfügig und muss dementsprechend auch nicht oder nur geringfügig nachbearbeitet werden. Außerdem bestehen beide Bauteile, also das Stammblatt und der Schneidstreifen, jeweils für sich genommen vorzugsweise nur aus einem einzigen Material, so dass temperaturbedingte Verspannungen und Verformungen während der normalen Bearbeitung eines Werkstückes nicht oder nur in einem sehr geringen Maße auftreten.

Ein Vorteil ist darin zu sehen, dass der Schneidstreifen mit den Schneidzähnen die mindestens eine Schneidfläche des Stammblattes überragt, so dass nach dem Zusammenfügen von Stammblatt und Schneidstreifen eine aufwändige Schränkung der Zähne entfallen kann. Die Schneidzähne können insbesondere bereits vor der Verbindung mit dem Stammblatt in den Schneidstreifen eingebracht werden, so dass keine Nachbearbeitung erforderlich ist.

Der Schneidstreifen besteht zweckmäßigerweise lediglich aus einem radial dünnen Trägerstreifen, der Träger der Schneidzähne ist und unmittelbar oder mittelbar auf den Außenrand des Stammblattes aufgebracht wird. Die Verbindung zwischen Stammblatt und Schneidstreifen wird vorteilhafterweise durch Schweißen, insbesondere Laserschweißen in stoffschlüssiger Weise durchgeführt. In Betracht kommen aber auch andere stoffschlüssige Verbindungsarten, beispielsweise Verkleben. Erfindungsgemäß wird ein dünner als das Stammblatt bemessener Schneidstreifen mäanderförmig auf der Umfangsfläche des Stammblatts fixiert, insbesondere verschweißt, so dass er abwechselnd seitlich über das Stammblatt hinausragt.

Es können unterschiedliche Grundgeometrien für den Schneidstreifen verwendet werden. Möglich ist beispielsweise eine rechteckförmige Querschnittsgeometrie, die ggf. auch quadratisch ausgebildet sein kann, oder eine trapezförmige Querschnittsgeometrie, die sich insbesondere zur radialen Außenseite hin erweitert. Das Stammblatt weist eine nicht-runde Geometrie auf. Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines teilkreisförmigen Sägeblattes mit einem Stammblatt, auf dessen Außenrand ein Schneidstreifen mit Scheidzähnen aufgesetzt ist, der durch Laserschweißen mit dem Stammblatt verbunden ist,
- Fig. 2: das Sägeblatt in Seitenansicht,
- Fig. 3: das Sägeblatt in Draufsicht,
- Fig. 4: eine Ansicht gemäß Schnittlinie IV-IV aus Fig. 3 mit einer Darstellung des Stammblattes und des aufgesetzten Schneidstreifens,
- Fig. 5 bis 7: verschiedene Querschnittsgeometrien und Relativpositionen eines auf das Stammblatt aufgesetzten Schneidstreifens,
- Fig. 8: eine schematische Darstellung eines scheibenförmigen Sägeblattes,
- Fig. 9: eine schematische Darstellung eines länglichen Sägeblattes mit bogenförmiger Schneidseite.
- Fig. 10: eine Sägeblatt-Seitenansicht gemäß Figur 2, jedoch mit mäanderförmigem Schneidstreifen.

In den Figuren sind gleiche Bauteile mit gleichen Bezugszeichen versehen.

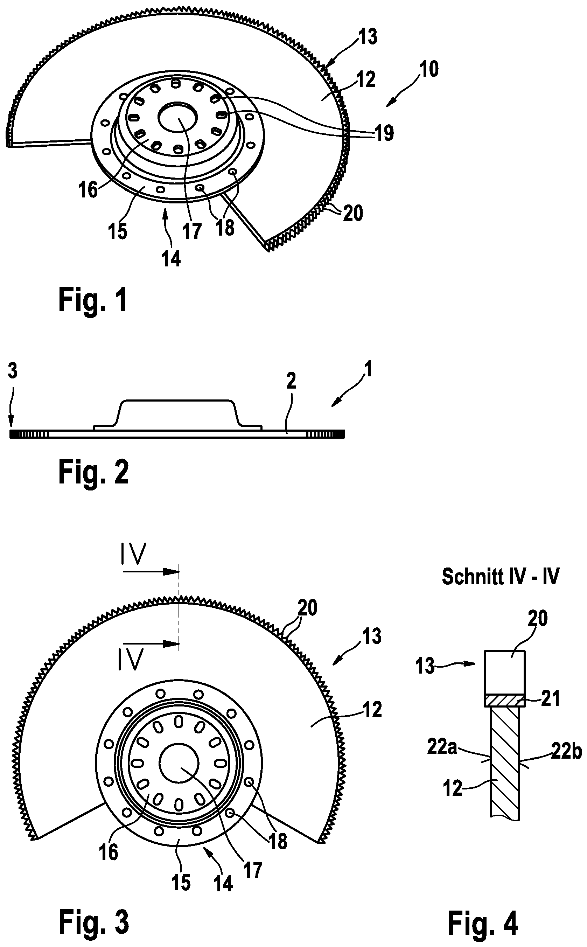

Ein in den Figuren 1 bis 3 dargestelltes Sägeblatt 10 für eine Handwerkzeugmaschine weist eine teilkreisförmige Geometrie auf und besteht aus einem Stammblatt 12 und einem Schneidstreifen 13, der auf den Außenrand des Stammblattes 12 aufgesetzt und fest mit diesem verbunden ist. In eine zentrale, größere Ausnehmung im Stammblatt 12 ist ein Befestigungsabschnitt 14 eingebracht, der einen gegenüber der Ebene des Stammblattes 12 axial erhabenen Befestigungsdom 16 und einen umlaufenden, mit dem Befestigungsdom 16 einteilig ausgebildeten Kragen 15 aufweist, welcher über Befestigungselemente 18 mit dem Stammblatt 12 verbunden ist. In den erhabenen Befestigungsdom 16 ist eine zentrale Befestigungsausnehmung 17 eingebracht, über die das Sägeblatt 10 mit der Antriebswelle der Handwerkzeugmaschine verbunden wird. Die zentrale Befestigungsausnehmung 17 im Befestigungsdom 16 ist des Weiteren von über den Umfang gleichmäßig verteilten Ausnehmungen 19 eingerahmt.

Wie der Schnittdarstellung gemäß Fig. 4 zu entnehmen, besteht der Schneidstreifen 13 aus einem Trägerstreifen 21 und den Schneidzähnen 20, die einteilig mit dem Trägerstreifen 21 ausgebildet sind. Der Schneidstreifen 13 ist als eigenständiges Bauteil gebildet, welches separat vom Stammblatt 12 ausgeführt ist und insbesondere stoffschlüssig mit dem radialen Außenrand des Stammblattes verbunden wird, insbesondere mittels Schweißens, vorzugsweise Laserschweißens. Das Stammblatt 12 und der Schneidstreifen 13 bestehen aus unterschiedlichen Materialien, wobei das Stammblatt 12 zweckmäßig aus einem weicheren Material besteht als der Schneidstreifen 13 mit den Schneidzähnen 20. Infrage kommt insbesondere ein kohlenstoffhaltiger Stahl für das Stammblatt, beispielsweise HCS mit einer Härte von 48 +- 3.5 HRC, und ein Schnellarbeitsstahl für den Schneidstreifen, beispielsweise HSS mit einer Härte von 840 +- 60 HV 10.

Wie Fig. 4 weiterhin zu entnehmen, ist die in Achsrichtung gemessene Dicke des Stammblattes 12 geringer als die Dicke des Schneidstreifens 13, der in Bezug auf eine Mittelebene durch das Stammblatt 12 symmetrisch zu diesem angeordnet ist, so dass der Schneidstreifen 13 beide Seitenflächen 22a, 22b des Stammblattes 12 überragt. Die Querschnittsgeometrie des Schneidstreifens 13 ist rechteckförmig, wobei die radiale Erstreckung etwas größer ist als die axiale. Der Trägerstreifen 21 weist in radialer Richtung eine erheblich kleinere Erstreckung auf als die Schneidzähne 20, die radiale Erstreckung des Trägerstreifens 21 beträgt nicht mehr als 20 % der radialen Erstreckung der Schneidzähne 20.

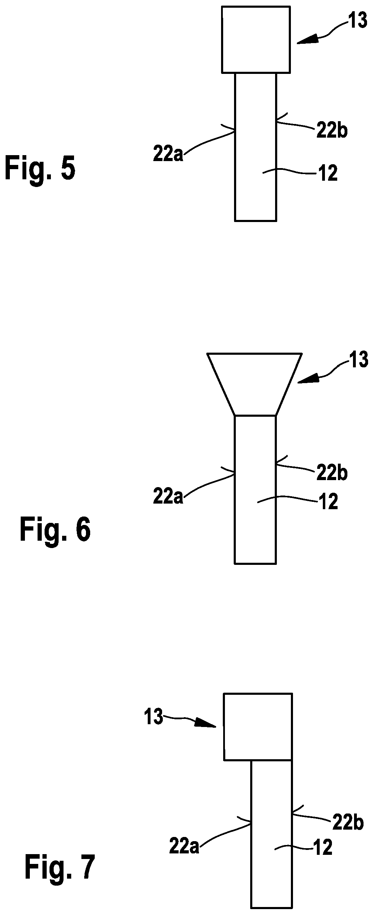

In den Figuren 5 bis 7 sind weitere Querschnittsgeometrien für den Schneidstreifen 13 dargestellt, außerdem sind verschiedene Möglichkeiten skizziert, wie der Schneidstreifen 13 in Bezug auf das Stammblatt 12 angeordnet werden kann. Gemäß Fig. 5 weist der Schneidstreifen 13 eine quadratische Querschnittsgeometrie auf, die Erstreckung in Achsrichtung des Schneidstreifens ist größer als die entsprechende Erstreckung des Stammblattes 12. Der Schneidstreifen 13 ist symmetrisch zum Stammblatt 12 positioniert, so dass der Schneidstreifen 13 beide Seitenstreifen 22a und 22b des Stammblattes 12 seitlich überragt.

In Fig. 6 besitzt der Schneidstreifen 13 eine trapezförmige Geometrie, wobei die Schmalseite des Trapezes dem Stammblatt 12 zugewandt ist und die Längsseite des Trapezes auf der radial außen liegenden Seite angeordnet ist. Die Schmalseite des Trapezes ist in ihrer axialen Erstreckung auf diejenige des Stammblattes 12 angepasst und schließt bündig mit den beiden Seitenflächen 22a und 22b ab. Das Trapez ist symmetrisch ausgebildet, aufgrund der axial nach außen strebenden Trapezseiten überragt der Schneidstreifen 13 im Bereich der radial außen liegenden Seite beide Seitenflächen 22a und 22b des Stammblattes 12.

Im Ausführungsbeispiel nach Fig. 7 ist der Schneidstreifen 13 mit quadratischem Querschnitt ausgeführt. Im Unterschied zu Fig. 5 ist aber der Schneidstreifen 15 außerhalb der Symmetrieebene durch das Stammblatt 12 angeordnet, derart, dass eine Seitenwand des Schneidstreifens 13 bündig mit einer Seitenfläche 22b des Stammblattes 12 abschließt. Die gegenüberliegende Seitenwand des Schneidstreifens überragt dagegen die Seitenfläche 22a des Stammblattes.

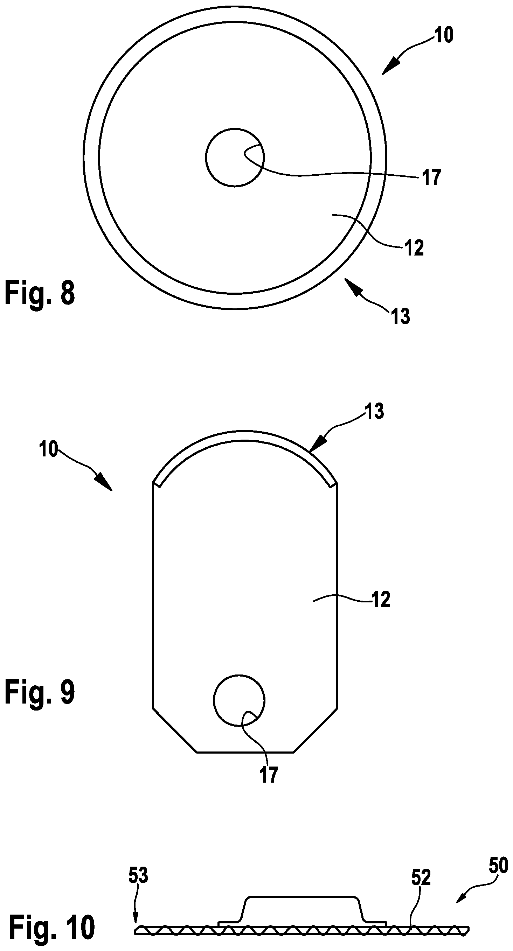

In den Figuren 8 und 9 sind weitere Geometrien für ein Sägeblatt 10 dargestellt. Gemäß Fig. 8 ist das Sägeblatt 10 kreis- bzw. scheibenförmig ausgeführt, dementsprechend ist der Schneistreifen 13 als Ring ausgebildet. Der Schneidstreifen 13 kann als einteiliger Ring ausgebildet sein oder aber, gemäß alternativer Ausführung, aus mehreren einzelnen Segmenten zu einem Ring zusammengesetzt werden.

Gemäß Fig. 9 besitzt das Stammblatt 12 eine etwa rechteckförmige Geometrie, wobei die Scheidseite gerundet ausgebildet ist. An der Schneidseite ist der Schneidstreifen 13 mit korrespondierender Krümmung aufgesetzt.

In Fig. 10 ist eine Seitenansicht eines Sägeblatts 50 ähnlich dem gemäß Figur2, jedoch mit mäanderförmigem Schneidstreifen gezeigt. Daraus wird deutlich, dass ein dünner als das Stammblatt 52 bemessener Schneidstreifen 53 mäanderförmig auf der Umfangsfläche des Stammblatts fixiert, insbesondere verschweißt ist, so dass er abwechselnd seitlich über das Stammblatt 52 hinausragt. Damit ist das Sägeblatt 50 kostengünstig, material- und gewichtssparend mit einem effektiven, langlebigen Schneidbelag versehen.

## Patentansprüche

1. Sägeblatt für Werkzeugmaschinen, insbesondere für Handwerkzeugmaschinen wie Sägen, Trennschleifer oder Handkreissägen, mit einem Stammblatt (12), an dessen Außenrand ein Schneidstreifen (13) mit Schneidzähnen (20) angeordnet ist,
wobei das Stammblatt (12) und der Schneidstreifen (13) als separate Bauteile ausgeführt sind, die fest miteinander zu verbinden sind, wobei das Stammblatt (12) zumindest abschnittsweise bogenförmig und der Schneidstreifen (13) gebogen ausgebildet ist, wobei das Stammblatt (12) eine nicht-runde Geometrie aufweist, und wobei der Schneidstreifen (13) teilringförmig ausgebildet ist, **dadurch gekennzeichnet, dass** der Schneidstreifen (13) dünner bemessen ist als die Stärke des Stammblatts (12) und mäanderförmig auf der Umfangseite des Stammblatts (12) befestigt ist und in Achsrichtung gesehen zumindest eine Seitenfläche (22a, 22b) des Stammblatts (12) überragt.

2. Sägeblatt nach Anspruch 1, **dadurch gekennzeichnet, dass** der Schneidstreifen (13) und das Stammblatt (12) durch Schweißen, insbesondere Laserschweißen miteinander verbunden sind.

3. Sägeblatt nach Anspruch 1, **dadurch gekennzeichnet, dass** der Schneidstreifen (13) beide Seitenflächen (22a, 22b) des Stammblattes (12) überragt.

4. Sägeblatt nach einem der Ansprüche 1 bis 3, **dadurch gekennzeichnet, dass** der Schneidstreifen (13) einen rechteckförmigen, insbesondere eine quadratischen Querschnitt aufweist.

5. Sägeblatt nach einem der Ansprüche 1 bis 4, **dadurch gekennzeichnet, dass** der Schneidstreifen (13) einen trapezförmigen Querschnitt aufweist.

6. Sägeblatt nach einem der Ansprüche 1 bis 5, **dadurch gekennzeichnet, dass** das Stammblatt (2) und der Schneidstreifen (13) aus unterschiedlichen Materialien bestehen.

7. Sägeblatt nach Anspruch 6, **dadurch gekennzeichnet, dass** das Stammblatt (12) aus einem weicheren Material besteht als der Schneidstreifen (13).

8. Sägeblatt nach Anspruch 7, **dadurch gekennzeichnet, dass** das Stammblatt (12) aus einem kohlenstoffhaltigen Stahl (HCS) und der Schneidstreifen (13) aus einem Schnellarbeitsstahl (HSS) gefertigt ist.

9. Sägeblatt nach einem der Ansprüche 1 bis 8, **dadurch gekennzeichnet, dass** das Stammblatt (12) eine Härte von 48 +- 3.5 HRC aufweist.

10. Sägeblatt nach einem der Ansprüche 1 bis 9, **dadurch gekennzeichnet, dass** der Schneidstreifen (12) eine Härte von 840 +- 60 HV 10 aufweist.

11. Sägeblatt nach Anspruch 1, **dadurch gekennzeichnet, dass** der Schneidstreifen (13) aus einzelnen Segmenten besteht.

12. Werkzeugmaschine mit oszillierend antreibbarem Sägeblatt (10) nach einem der Ansprüche 1 bis 11.

## Claims

1. Saw blade for machine tools, in particular for hand-held machine tools such as saws, angle grinders or hand-held circular saws, having a parent blade (12), on the outer edge of which a cutting strip (13) having cutting teeth (20) is arranged,
the parent blade (12) and cutting strip (13) being embodied as separate components which are to be firmly connected to each other, the parent blade (12) being formed in a curve, at least in some sections, and the cutting strip (13) being formed in a curve,
the parent blade (12) having a non-round geometry, and the cutting strip (13) being formed in the shape of a partial ring,
**characterized in that** the cutting strip (13) is dimensioned to be thinner than the thickness of the parent blade (12) and is fixed in the form of a meander to the circumferential side of the parent blade (12) and, as seen in the axial direction, projects beyond at least one side face (22a, 22b) of the parent blade (12).

2. Saw blade according to Claim 1,
**characterized in that** the cutting strip (13) and the parent blade (12) are connected to each other by welding, in particular laser welding.

3. Saw blade according to Claim 1,
**characterized in that** the cutting strip (13) projects beyond both side faces (22a, 22b) of the parent blade (12).

4. Saw blade according to one of Claims 1 to 3,
**characterized in that** the cutting strip (13) has a rectangular, in particular square, cross section.

5. Saw blade according to one of Claims 1 to 4,
**characterized in that** the cutting strip (13) has a trapezoidal cross section.

6. Saw blade according to one of Claims 1 to 5,
**characterized in that** the parent blade (2) and the cutting strip (13) consist of different materials.

7. Saw blade according to Claim 6,
**characterized in that** the parent blade (12) consists of a softer material than the cutting strip (13).

8. Saw blade according to Claim 7,
**characterized in that** the parent blade (12) is made of a carbon steel (HCS) and the cutting strip (13) is made of a high-speed steel (HSS).

9. Saw blade according to one of Claims 1 to 8,
**characterized in that** the parent blade (12) has a hardness of 48 +- 3.5 HRC.

10. Saw blade according to one of Claims 1 to 9,
**characterized in that** the cutting strip (12) has a hardness of 840 +- 60 HV 10.

11. Saw blade according to Claim 1, **characterized in that** the cutting strip (13) consists of individual segments.

12. Machine tool having a saw blade (10) according to one of Claims 1 to 11 that can be driven in oscillation.

## Revendications

1. Lame de scie pour machines-outils, en particulier pour machines-outils manuelles telles que des scies, des tronçonneuses à meule ou des scies circulaires manuelles, comprenant un corps de lame (12) au niveau du bord extérieur duquel est disposée une bande tranchante (13) avec des dents de coupe (20), le corps de lame (12) et la bande tranchante (13) étant réalisés sous forme de composants séparés qui doivent être raccordés fixement l'un à l'autre, le corps de lame (12) étant réalisé au moins en partie en forme d'arc et la bande tranchante (13) étant réalisée sous forme courbe, le corps de lame (12) présentant une géométrie non circulaire, et la bande tranchante (13) étant réalisée sous forme de bague partielle, **caractérisée en ce que** la bande tranchante (13) est dimensionnée sous forme plus mince que l'épaisseur du corps de lame (12) et est fixée en forme de méandres sur le côté périphérique du corps de lame (12) et, vu dans la direction axiale, fait saillie au moins au-delà d'une surface latérale (22a, 22b) du corps de lame (12).

2. Lame de scie selon la revendication 1, **caractérisée en ce que** la bande tranchante (13) et le corps de lame (12) sont raccordés l'un à l'autre par soudage, en particulier par soudage au laser.

3. Lame de scie selon la revendication 1, **caractérisée en ce que** la bande tranchante (13) fait saillie au-delà des deux surfaces latérales (22a, 22b) du corps de lame (12).

4. Lame de scie selon l'une quelconque des revendications 1 à 3, **caractérisée en ce que** la bande tranchante (13) présente une section transversale rectangulaire, en particulier carrée.

5. Lame de scie selon l'une quelconque des revendications 1 à 4, **caractérisée en ce que** la bande tranchante (13) présente une section transversale trapézoïdale.

6. Lame de scie selon l'une quelconque des revendications 1 à 5, **caractérisée en ce que** le corps de lame (2) et la bande tranchante (13) se composent de matériaux différents.

7. Lame de scie selon la revendication 6, **caractérisée en ce que** le corps de lame (12) se compose d'un matériau plus tendre que celui de la bande tranchante (13).

8. Lame de scie selon la revendication 7, **caractérisée en ce que** le corps de lame (12) est fabriqué à partir d'un acier contenant du carbone (HCS) et la bande tranchante (13) est fabriquée à partir d'un acier à coupe rapide (HSS).

9. Lame de scie selon l'une quelconque des revendications 1 à 8, **caractérisée en ce que** le corps de lame (12) présente une dureté de 48 +-3,5 HRC.

10. Lame de scie selon l'une quelconque des revendications 1 à 9, **caractérisée en ce que** la bande tranchante (12) présente une dureté de 840 +- 60 HV 10.

11. Lame de scie selon la revendication 1, **caractérisée en ce que** la bande tranchante (13) se compose de segments individuels.

12. Machine-outil comprenant une lame de scie (10) pouvant être entraînée en oscillation selon l'une quelconque des revendications 1 à 11.
